# EUROPÄISCHE PATENTSCHRIFT

(11) **EP 3 047 195 B1**
(45) Veröffentlichungstag und Bekanntmachung des Hinweises auf die Patenterteilung: **26.09.2018**
(21) Anmeldenummer: 14761789.8
(22) Anmeldetag: 20.08.2014
(51) Int. Cl.: F16T 1/10, F16K 31/12, F16T 1/38, F16K 1/52, F16K 31/00

(54) **KONDENSATABLEITER**
CONDENSATE DRAIN
PURGEUR D'EAU DE CONDENSATION

(30) Priorität: 19.09.2013 CH 16142013
(43) Veröffentlichungstag der Anmeldung: 27.07.2016
(73) Patentinhaber: GEA Aseptomag AG, 3422 Kirchberg (CH)
(72) Erfinder: HAGNAUER, Thomas, 3608 Thun (CH)
(74) Vertreter: Hauck Patentanwaltspartnerschaft mbB
(86) Internationale Anmeldenummer: PCT/EP2014/002285
(87) Internationale Veröffentlichungsnummer: WO 2015/039724

(56) Entgegenhaltungen:
- WO-A2-2012/168221
- DE-A1- 1 751 699
- DE-C- 689 860
- GB-A- 482 058
- US-A- 1 976 730
- US-A- 3 286 926
- US-A- 3 351 282
- US-A- 3 403 853

## Beschreibung

Die Erfindung betrifft einen Kondensatableiter nach dem Oberbegriff des Anspruchs 1 und eine Prozessanlage nach dem Oberbegriff des Anspruchs 14.

In Industriezweigen mit hohen hygienischen Anforderungen, beispielsweise der Lebensmittelindustrie, müssen die verwendeten Prozessanlagen regelmäßig gereinigt werden.

In einer ersten Phase der Reinigung wird die Anlage mit Wasser, Lauge und Säure gespült, wobei sich Lauge und Säure in einem Temperaturbereich zwischen 60°C und 95°C befinden können. Hierbei ist ein hinreichend großer Fluiddurchsatz in allen Anlagenteilen anzustreben. Man spricht in dieser Phase von CIP, "cleaning in place".

In einer zweiten Phase wird die Anlage sterilisiert, man spricht auch von SIP, "sterilisation in place". Hierbei ist ein verringerter Einsatz von sterilisierenden Chemikalien angestrebt. Daher kommt Wasserdampf zum Einsatz, der unter definierten Druck- und Temperaturbedingungen als Sattdampf durch die Prozessanlage geleitet wird, beispielsweise im Temperaturbereich von 125°C bis 145°C bei einem Druck von 2,3 bar bis 3,1 bar. Diese Bedingungen sind gewissenhaft einzuhalten. Dies wird jedoch erschwert, da die Prozessanlage selbst eine Temperaturverteilung besitzt. Sie besitzt kalte Abschnitte an denen es zur Kondensation von Dampf kommt.

Dieses Kondensat in der Prozessanlage ist für den Sterilisationsprozess problematisch. Zum einen steigt durch das Kondensat der Gesamtenergiebedarf, denn das Kondensat muss wieder über den Siedepunkt hinweg erwärmt und/oder neuer Dampf zum Ersetzen des kondensierten Dampfes erzeugt werden. Zum anderen kann durch das Kondensat nicht gewährleistet werden, dass die Anlage im Bereich des Kondensats von Verunreinigungen, bspw. Bakterien, befreit wird. Das Kondensat muss daher mit Hilfe eines so genannten Kondensatableiters aus der Anlage entfernt werden.

Die DE 689 860 stellt einen solchen Kondensatableiter mit Blick auf die chemische Industrie vor. Er umfasst eine Schließanordnung, welche mit einem Dehnungskörper zusammenwirkt, der einen Balg besitzt. Der Balg ist mit einer leicht siedenden Flüssigkeit gefüllt. Durch Erwärmen über den Weg des Balges und der Deckel denen sich Gas und Flüssigkeit aus, wodurch sich der Balg in seine axiale Richtung ausdehnt. Hierdurch wird ein Schließkegel in dichtenden Kontakt mit einem Ventilsitz gebracht. Liegt Kondensat im Kondensatabieiter vor, wird der Balg abgekühlt, so dass sich Gas und Flüssigkeit in seinem Inneren zusammenziehen. In der Folge zieht sich auch der Balg zusammen, so dass das Schließglied vom Ventilsitz abgehoben wird und das Kondensat aus dem Kondensatabieiter abfließen kann.

Einen jüngeren Ansatz zeigt die DE 10 211 050 955 A1. In dem dort vorgestellten Kondensatabieiter wird auf den Dehnungskörper vollständig verzichtet. An seiner Stelle wird das Schließglied von einem pneumatischen Antrieb verstellt. Der Antrieb wird von einer Steuerelektronik angesteuert, die auf Temperaturmesswerte reagiert, welche im Innenraum des Kondensatabieiters erhoben werden.

Unabhängig vom dem benutzten Verstellprinzip ist den Kondensatableitern gemein, dass der Querschnitt des Auslasses in Offenstellung des Abieiters möglichst klein ist. Hierdurch soll der Abfluss der Flüssigkeit erreicht aber das Absinken des Dampfdruckes respektive der Temperatur verhindert werden.

In der Prozessanlage wird ein solcher Kondensatabieiter nach dem Stand der Technik in eine Zweigleitung eingebaut, wobei in der Regel zwischen Prozessanlage und Kondensatabieiter ein Ventil vorgesehen ist, mit welchem diese Leitung auf eine zu einer Entsorgungseinrichtung führenden Abführleitung umgeschaltet werden kann. Ein weiteres Ventil kann vorgesehen sein, mit dem die Abführleitung absperrbar ist.

US 3,286,926A beschreibt einen Kondensatableiter umfassend einen Stapel bildende bimetallische Scheiben, die auf Änderungen der thermodynamischen Verhältnisse aufgrund der Anwesenheit von Kondensat im Kondensatableiter reagieren. Der Stapel ist von einer Stange durchsetzt, an deren entgegengesetztem Ende ein Schließelement zum Verschluss eines Ventilsitzes befestigt ist. Die Scheiben des Stapels weisen eine temperaturveränderliche Wölbung auf, so dass sich bei einer Temperaturänderung die Wölbung derart ändert, dass die Stange bewegt wird und somit das Schließelement in maximal dichtenden Kontakt mit dem Ventilsitz gelangt.

US 3,403,853A beschreibt einen Kondensatableiter mit einer Schließanordnung, die einen temperaturveränderlichen Balg und ein Schließelement umfasst. Abhängig von den thermodynamischen Gegebenheiten in dem Kondensatableiter zieht sich der Balg zusammen bzw. dehnt sich aus und gibt somit eine Fluidverbindung frei bzw. sperrt diese.

US 3,351,282 A beschreibt einen Kondensatableiter, der eine Fluidverbindung zwischen einem ersten Anschluss und einem zweiten Anschluss temperaturabhängig schalten kann.

WO 2012/168221 A2 offenbart einen Kondensatableiter, der über ein Verschlusselement mit einem, beispielsweise pneumatischen, Antrieb verstellt wird.

Es ist daher Aufgabe der Erfindung, einen Kondensatableiter zu schaffen, der besser reinigbar ist. Es soll zudem durch den Kondensatabieiter eine Vereinfachung der Prozessanlage erreicht werden.

Diese Aufgabe wird gelöst durch einen Kondensatableiter mit den Merkmalen des Anspruchs 1 und einer Prozessanlage mit den Merkmalen des Anspruchs 14. Die abhängigen Ansprüche 2 bis 13 und 15 geben vorteilhafte Weiterbildungen des Kondensatableiters und der Prozessanlage an.

Der erfindungsgemäße Kondensatableiter besitzt eine Schließanordnung mit einem thermodynamischen Stellglied, so dass eine Fluidverbindung zwischen einem ersten und einem zweiten Anschluss des Kondensatableiters thermodynamisch gesteuert schaltbar ist. Der Kondensatableiter zeichnet sich dadurch aus, dass eine mit der Schließanordnung verbundene Verstellvorrichtung vorgesehen ist, unter deren Wirkung die Fluidverbindung ebenfalls schaltbar ist. Das thermodynamische Stellglied bewirkt ein Schalten in Abhängigkeit der Druck- und Temperaturverhältnisse im Inneren des Kondensatableiters und damit ein sehr einfaches und präzises Ablassen von Kondensat. Die Verstellvorrichtung ermöglicht es zusätzlich, die Fluidverbindung unabhängig von den thermodynamischen Gegebenheiten zu schalten. Insbesondere erlaubt die Verstellvorrichtung, die Schließanordnung in eine bessere Reinigungsstellung zu verfahren. Dadurch wird verhindert, dass sich im Kondensatableiter Verunreinigungen ansammeln, beispielsweise in den für die Kondensatablassfunktion gewünschten engen Spalten. Teure Demontagearbeiten entfallen. Eine Verstellvorrichtung erlaubt darüber hinaus, einen größeren Schaltweg der Schließanordnung als mittels des thermodynamischen Stellgliedes zu schaffen. Daher kann technisch einfach und kostengünstig ein Ventil geschaffen werden, welches bei Schaltung mittels Verstellvorrichtung größere Fluiddurchsätze als beim thermodynamischen Schalten besitzt.

Gemäß einer Weiterbildung ist die Verstellvorrichtung als Verschiebevorrichtung ausgeführt. Hierdurch wird eine geradlinige Bewegung bewirkt, die in vorteilhafter Weise verhindert, dass aus Drehbewegungen entstehende Torsionsmomente in die Schließanordnung und insbesondere das thermodynamische Stellglied eingeleitet werden.

Die Verstellvorrichtung ist gemäß Weiterbildung druckmittelbetreibbar, insbesondere pneumatisch, ausgeführt, was einen kostengünstigen und sicheren Aufbau bedeutet.

Es ist für den Prozess zur Reinigung der Prozessanlage vorteilhaft, den Kondensatableiter unabhängig von der Funktion des thermodynamischen Stellgliedes geschlossen zu halten, beispielsweise während des Aufheizens auf die Grundtemperatur zur SIP-Phase. Daher sieht eine vorteilhafte Weiterbildung vor, die Verschiebevorrichtung so zu gestalten, dass sie die Wirkung des thermodynamischen Stellglieds derart ausgleicht, dass sich die Schließanordnung in einer Schließstellung zur Unterbrechung der Fluidverbindung befindet, unabhängig von der Kontraktion oder Ausdehnung des thermodynamischen Stellgliedes.

Eine kostengünstige und dabei sehr genau auf die für die gewünschte Funktion notwendigen thermodynamischen Anforderungen einstellbare Ausführung des thermodynamischen Stellgliedes sieht vor, dieses als mit einem Fluid gefüllten Balg auszuführen.

Eine Weiterbildung des als Balg ausgeführten thermodynamischen Stellgliedes sieht vor, innerhalb des Balges ein Führungsmittel anzuordnen, welches die Kontraktion des Balges entlang einer axialen Richtung begrenzt und dabei die Auslenkung in radialer Richtung verhindert. Dies verhindert zum einen eine Spaltbildung zwischen Schließanordnung und Ventilsitz, die durch Auslenkung des Balges aus seiner Sollposition entstehen kann. Zum anderen verhindert es eine Überdehnung des Balges mit entsprechender Materialbeanspruchung.

Das Führungsmittel weist gemäß einer vorteilhaften Weiterbildung eine Stange auf, welche teleskopartig beweglich in einer Hohlstange angeordnet ist. Dies ist kostengünstiger, einfacher und leicht herstellbarer Aufbau des Führungsmittels. Zudem erlaubt es eine zentrale Anordnung innerhalb des Balges und einen im Verhältnis zum Balgvolumen kleinen Aufbau, wodurch die Einflussnahme auf das thermodynamische Verhalten des Stellgliedes gering gehalten wird.

Gemäß einer vorteilhaften Ausführung umfasst das thermodynamische Stellglied eine mit einem Fluid gefüllte Kapsel, welche durch Wirkung des Fluids in einer axialen Richtung dehnbar ist. Durch diese Gestaltung wird auf Balgfalten verzichtet, was in Prozessanlagen Verunreinigungen des Kondensatableiters verringert, in denen stückige Produkte verarbeitet werden.

Eine Weiterbildung der Ausführung mit einer Kapsel sieht vor, in der Schließanordnung einen Durchlass vorzusehen, der mittels des thermodynamischen Stellgliedes steuerbar ist. Dies erlaubt es auf einfache Weise, den Durchlass mit einer anderen, vorzugsweise kleineren, Durchtrittsfläche als den mittels der Verstellvorrichtung gesteuerten Durchlass zu schaffen.

In einer anderen Weiterbildung wird vorgeschlagen, als Fluid in dem mit Fluid gefüllten thermodynamischen Stellglied eine Mischung aus Ethanol und Wasser vorzusehen. Diese ist in Bezug auf Hygiene und Sterilität bei etwaig auftretenden Schäden am Stellglied vorteilhaft, kostengünstig und das thermodynamische Verhalten ist in einem weiten Bereich einfach einstellbar.

Gemäß einer Weiterbildung wird vorgeschlagen, zwischen Schließanordnung und Verstellvorrichtung eine Schaltstange vorzusehen, welche eine Einschnürung aufweist. Im Bereich der Einschnürung besitzt die Schaltstange einen verringerten Querschnitt, so dass die Wärmeleitung verringert wird. Diese Maßnahme verringert die Wärmekopplung und so die Beeinflussung des thermodynamischen Verhaltens des thermodynamischen Stellgliedes, beispielsweise durch den mit Prozessfluid in Kontakt gelangende Teile der Schaltstange.

Gemäß einer nächsten Weiterbildung wird ein metallisch dichtendes Zusammenwirken von Schließanordnung und Ventilsitz vorgeschlagen. Dies ist vorteilhaft gut reinigbar, vermeidet Stellen, an denen sich Bakterien ansammeln können und ist kostengünstig. Zudem ist es auch dauerhaft für hohe Temperaturen geeignet.

Gemäß einer wiederum nächsten Weiterbildung ist vorgesehen, mit der Verstelleinrichtung das Öffnen einer Durchtrittsfläche zu bewirken, die größer als diejenige Durchtrittsfläche ist, welche mittels des thermodynamischen Stellglieds freigegeben wird. In der Kondensatablassfunktion ist es wünschenswert, einen Spalt oder kleinen Durchlass freizugeben, während es in anderen Phasen des Reinigungsprozesses wünschenswert ist, hohe Durchsätze durch den Kondensatableiter zu erreichen. Deutliche Unterschiede der Durchtrittsflächen sind gemäß dieser Weiterbildung vorteilhaft einfach und kostengünstig darstellbar.

Die erfindungsgemäße Prozessanlage weist einen erfindungsgemäßen Kondensatableiter auf, welcher zwischen einer Rohrleitungsanordnung und einer Entsorgungseinrichtung angeordnet ist. Vorteilhaft sind Rohrleitungsabschnitte und zusätzliche Ventile zum gesteuerten Umgehen des Kondensatableiters durch die erfindungsgemäße Prozessanlage unnötig und können entfallen. Ist der Kondensatableiter so weitergebildet, dass er unabhängig vom thermodynamischen Stellglied in eine Schließstellung gebracht werden kann, ist unnötig, zwischen Rohrleitungsanordnung und Kondensatableiter ein Absperrventil vorzusehen, das daher ebenfalls eingespart werden kann. Die Prozessanlage mit dem erfindungsgemäßen Kondensatableiter ist daher kostengünstig, raumsparend und besitzt eine verringerte Anzahl zu reinigender Bauteile.

Eine zusätzliche Verbesserung der Prozessanlage wird erreicht, indem gemäß Weiterbildung ein Temperatursensor im Innenraum der Prozessanlage oder mit diesem verbunden und eine mit dem Temperatursensor verbundene Steuereinrichtung vorgesehen sind. Dabei ist die Steuereinrichtung zum Steuern der Verstellvorrichtung in Abhängigkeit vom Signal des Temperaursensors eingerichtet. Dies erlaubt vorteilhaft den Wechsel vom thermodynamischen Betrieb des Kondensatableiters zum Kondensatablassen auf Betrieb mit der Verstellvorrichtung nach rein thermischen Gesichtspunkten zu steuern.

Anhand eines Ausführungsbeispiels und seiner Weiterbildungen sollen die Erfindung und ihre Vorteile näher erläutert werden. Es zeigen:
- Fig. 1:: Teillängsschnitt durch einen Kondensatableiter mit thermodynamischem Stellglied in einer Stellung, in der Kondensat abgelassen werden kann;
- Fig. 2:: Teillängsschnitt durch einen Kondensatableiter mit thermodynamischem Stellglied in einer Schließstellung, die durch Ausdehnung des thermodynamischen Stellgliedes bewirkt ist;
- Fig. 3:: Teillängsschnitt durch einen Kondensatableiter mit thermodynamischem Stellglied, welches mittels einer Verstellvorrichtung verstellt ist, um einen großen Austrittsquerschnitt freizugeben;
- Fig. 4:: Längsschnitt durch eine als Verschiebevorrichtung gestaltete Verstellvorrichtung;
- Fig. 5:: Längsschnitt durch eine Weiterbildung der Verschiebevorrichtung;
- Fig. 6:: Längsschnitt durch eine Schließanordnung mit einem thermodynamischen Stellglied mit Führungsanordnung;
- Fig. 7:: Längsschnitt durch eine Schließanordnung mit einem thermodynamischen Stellglied in einer Weiterbildung der Führungsanordnung;
- Fig. 8:: Längsschnitt durch einen Kondensatableiter mit einem alternativ ausgeführten thermodynamischen Stellglied;
- Fig. 9:: Längsschnitt durch einen Kondensatableiter nach Fig. 9 in einer Weiterbildung;
- Fig. 10:: Schematische Darstellung einer Anlage mit einem Kondensatableiter.

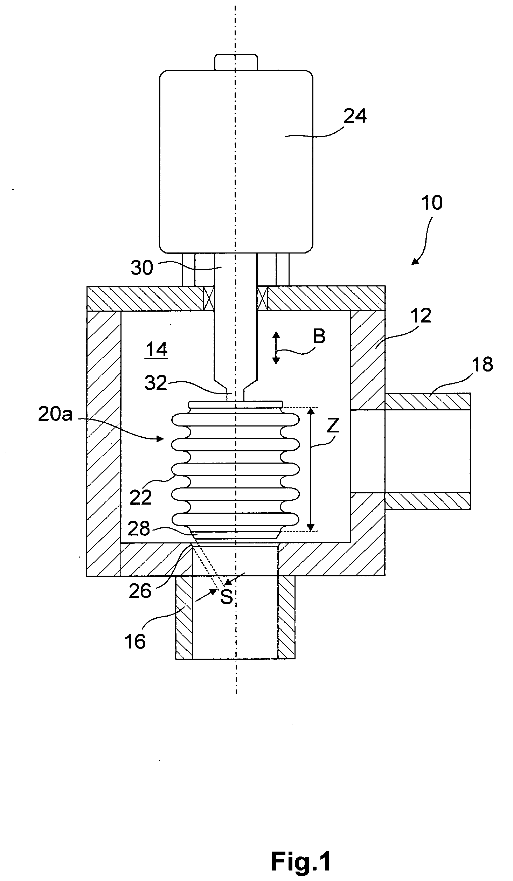

Die Abbildungen **Fig.1****,** **Fig. 2** und **Fig. 3** zeigen einen Kondensatableiter 10 in einer teilweise entlang einer Längsachse geschnittenen Darstellung in drei unterschiedlichen Schaltstellungen. In allen Fig. sind gleiche Teile mit gleichen Bezugszeichen versehen.

Das Gehäuse 12 umschließt einen Innenraum 14. Am Gehäuse 12 sind ein erster Anschluss 16 und ein zweiter Anschluss 18 angeordnet, durch die der Innenraum 14 für Prozessfluide zugänglich ist. Die Anschlüsse 16 und 18 sind mit einer Prozessanlage verbindbar ausgeführt und beispielsweise mit Rohren der Prozessanlage verschweißt, wenn der Kondensatableiter 10 in dieser verbaut ist.

Innerhalb des Innenraums befindet sich eine Schließanordnung 20a, welche zum Schalten einer Fluidverbindung zwischen erstem Anschluss 16 und zweitem Anschluss 18 eingerichtet ist. Die Schließanordnung 20a umfasst hierzu ein thermodynamisches Stellglied, welches gemäß dieser Ausführung des Beispiels einen Balg 22 aufweist.

Ein Ventilsitz 26 umgibt eine Öffnung, mit der der erste Anschluss 16 in den Innenraum 14 mündet. Mit diesem Ventilsitz wirkt ein Ventilteller 28 zusammen, der an dem Balg 22 der Schließanordnung 20a angeordnet ist.

Der Balg ist mit einem Fluid gefüllt, dessen Volumen von der Temperatur und dem auf den Balg einwirkenden Umgebungsdruck abhängt. Dieses Fluid kann eine Mischung mit Alkohol und Wasser, vorzugweise Ethanol und Wasser, als Hauptbestandteile sein. Das von den thermodynamischen Verhältnissen im Innenraum 14 abhängige Volumen des Fluids im Balg 22 bestimmt dessen Ausdehnung entlang der zu den Balgfalten senkrechten Richtung. Das Mischungsverhältnis und die Positionierung der Schließanordnung 20a innerhalb des Innenraums 14 sind so bemessen, dass sich im Falle von Kondensat im Innenraum 14 der Balg 22 auf eine zusammengezogene Länge Z zusammenzieht. Durch die Ausformung des Ventiltellers 28 als eine Stirnfläche des Balges 22 abschließendes Element ist der Balg 22 und damit das thermodynamische Stellglied nahe dem ersten Anschluss 16 angeordnet und taucht vorteilhaft bereits bei kleinen Kondensatmengen im Innenraum 14 in das Kondensat ein. Dies bewirkt ein vorteilhaftes thermodynamisches Schaltverhalten.

Zwischen dem Ventilsitz 26 und dem Ventilteller 28 ist bei der Länge Z des Balges 22 ein Spalt S ausgebildet, siehe **Fig. 1****.** Die Spaltweite ist vorzugsweise so bemessen, dass flüssiges Kondensat aus dem Innenraum 14 abfließt ohne dass ein kritischer Gasstrom durch den ersten Auslass 16 geschaffen wird. Ein Gasstrom ist dann kritisch, wenn durch zusammen mit dem Kondensat austretendes Gas der Druck im Innenraum 14 und in der Folge im Rohrleitungssystem der Prozessanlage unter die zur Aufrechterhaltung der SIP-Bedingungen notwendigen Werte abfällt.

Sobald das Kondensat durch den ersten Anschluss 16 aus dem Innenraum 14 abgelaufen ist, sind die thermodynamischen Gegebenheiten im Innenraum 14 derart, dass sich das Fluid im Balg 22 ausdehnt. Insbesondere erwärmen sich Balg 22 und darin enthaltenes Fluid, wenn sich die Schließanordnung 20a nicht mehr im Kontakt mit Kondensat befindet.

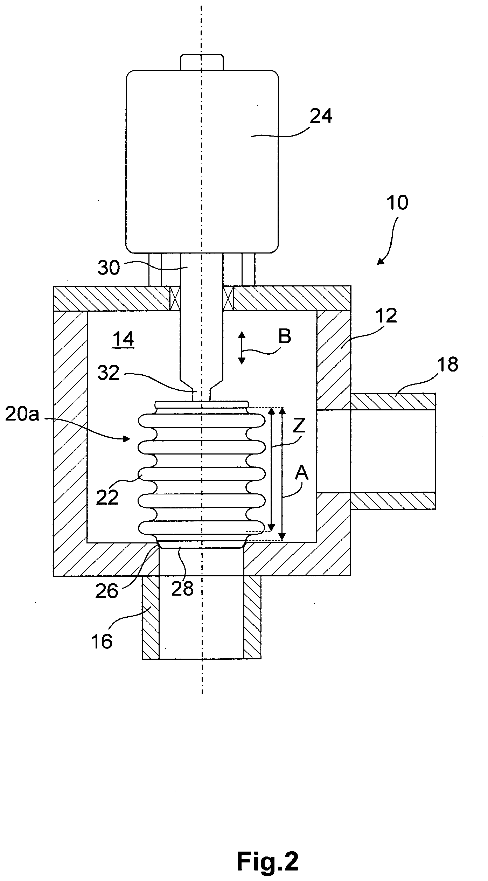

In **Fig. 2** ist dargestellt, dass sich der Balg 22 durch Erwärmung nach Ablauf des Kondensats auf eine ausgedehnte Länge A ausgedehnt hat. Durch diese Ausdehnung gelangen Ventilsitz 26 und Ventilteller 28 in berührenden Kontakt, womit die Fluidverbindung von Innenraum 14 und erstem Anschluss 16 unterbrochen wird. Kondensat und Gas können dann nicht mehr durch den ersten Anschluss 16 aus dem Kondensatableiter 10 austreten. Der Kontakt zwischen Ventilsitz 26 und Ventilteller 28 ist vorteilhaft metallisch ausgeführt. Hierdurch werden Reinigbarkeit und Temperaturbelastbarkeit des Kondensatableiters10 deutlich erhöht.

Insbesondere durch die beschriebene Gestaltung des Balges 22, Wahl des Fluides im Balg 22 und der Positionierung der Schließanordnung 20a im Innenraum 14 des Kondensatableiters 10 ist die Schließanordnung 20a zum thermodynamisch gesteuerten Schalten der Fluidverbindung zwischen erstem Anschluss 16 und zweitem Anschluss 18 eingerichtet.

Der Kondensatableiter 10 weist eine mit dem Gehäuse 12 verbundene Verstellvorrichtung 24 auf. Diese ist mittels einer durch das Gehäuse 12 abgedichtet hindurchgeführte Schaltstange 30 mit der Schließanordnung 20a verbunden. Die Verstellvorrichtung 24 bewirkt eine Verschiebung der Schaltstange 30 und damit der Schließanordnung 20a entlang einer Bewegungsrichtung B.

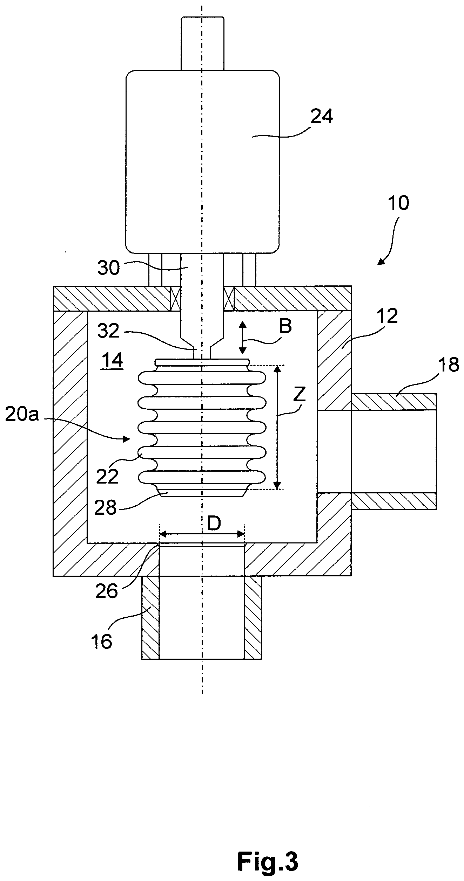

In **Fig. 3** ist dargestellt, dass die Schließanordnung 20a unter Wirkung der Verstellvorrichtung 24 tief entlang der Bewegungsrichtung B in den Innenraum 14 zurückgezogen ist, um eine Offenstellung zu schaffen. Ventilsitz 26 und Ventilteller 28 sind in dieser Position so weit voneinander beabstandet, dass der vollständige freie Durchmesser D des Ventilsitzes 26 zum Herstellen einer Fluidverbindung zwischen erstem Anschluss 16 und zweitem Anschluss 18 durch den Innenraum 14 hindurch genutzt wird.

Die zusammengezogene Länge Z und die ausgedehnte Länge A des Balges sowie der durch die Verstellvorrichtung bewirkte Hub sind so bemessen, dass Ventilsitz 26 und Ventilteller 28 in der Schaltstellung des Kondensatableiters 10 gemäß Fig. 3 einen so großen Abstand aufweisen, dass der vollständige freie Durchmesser D für die Fluidverbindung genutzt wird. Auf diese Weise ist die Schließanordnung 20a zum Schalten der Fluidverbindung unter Wirkung der Verstellvorrichtung 24 eingerichtet.

Vorteilhaft ist es, die Schaltstange 30 mit einer in den **Fig. 1** bis **Fig. 3** dargestellte Einschnürung 32 zu versehen. Diese Einschnürung 32 verringert die Wärmeankopplung von Schließanordnung 20a an Schaltstange 30 und Verstellvorrichtung 24. Durch Verringerung des Einflusses von Schaltstange 30 und Verstellvorrichtung 24 ist das thermodynamische Schaltverhalten des Balges 22 sehr präzise einstellbar und wird von den thermodynamischen Gegebenheiten im Innenraum 14 bestimmt.

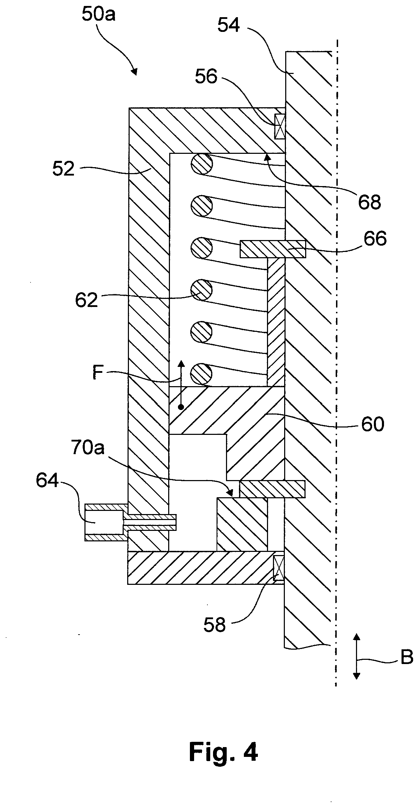

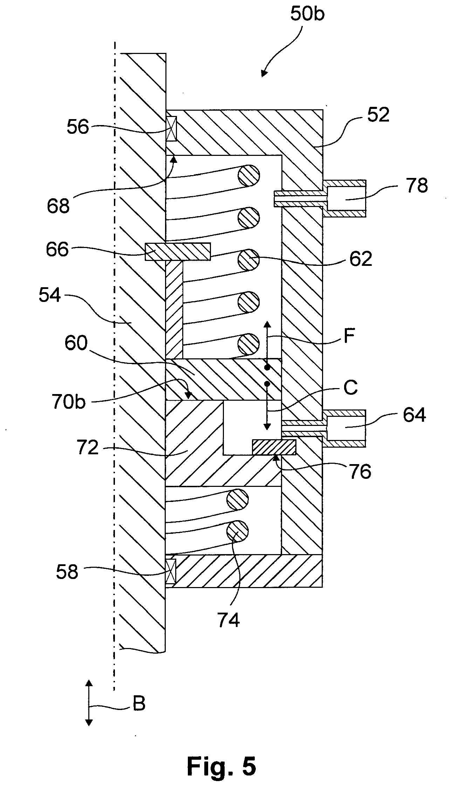

Ein Schnitt durch eine Ausführung der Verstellvorrichtung in Form einer Verschiebevorrichtung ist in **Fig. 4** gezeigt. Die **Fig. 5** stellt eine Weiterbildung dieser Verschiebevorrichtung vor.

Die Verschiebevorrichtung 50a der **Fig.** 4 umfasst einen druckdichten Behälter 52. Dieser wird von einer Antriebsstange 54 durchsetzt, die an den Durchtrittsstellen mit einer oberen Dichtung 56 und einer unteren Dichtung 58 abgedichtet ist. Die Antriebsstange 54 ist entlang der Bewegungsrichtung B bewegbar und geht am unteren Ende der **Fig. 4** und **Fig. 5** in die Schaltstange 30 der **Fig. 1** bis **Fig. 3** über oder ist mit dieser verbunden.

Ein Kolben 60 ist fest mit der Antriebsstange 54 verbunden, beispielsweise mittels einer form-, kraft- oder stoffschlüssigen Verbindung. Eine Feder 62 stützt sich am Behälter 52 einerseits und am Kolben 60 andererseits ab. Ein erster Druckmittelanschluss 64 ist derart angeordnet, dass Druckmittel in den Behälter 52 eingelassen werden kann, welches den Kolben 60 gegen die Kraft der Feder 62 in Öffnungsrichtung F bewegt. Diese Bewegung wird begrenzt, wenn ein mit der Antriebsstange 54 verbundener oder an dieser oder Kolben 60 ausgeformter Stopper 66 mit einem behälterseitigen ersten Anschlag 68 in Kontakt gelangt. Durch diese Bewegung wird die Schließanordnung 20a in die Offenstellung gemäß **Fig. 3** gebracht.

Wird die Verschiebevorrichtung 50a nicht mit Druckmittel beaufschlagt, drückt die Kraft der Feder 62 den Kolben 60 entgegen der Öffnungsrichtung F gegen einen zweiten Anschlag 70a. Dieser ist so bemessen, dass sich die Schließanordnung 20a in der Stellung gemäß **Fig. 1** und **Fig. 2** befindet, in der durch die Wirkung des Balges 22 die Fluidverbindung zwischen erstem Anschluss 16 und zweitem Anschluss 18 thermodynamisch geschaltet wird.

Die Verschiebevorrichtung 50a kann gemäß **Fig. 5** weitergebildet werden, in der sie als Weiterbildung mit 50b bezeichnet wird. Die mit gleichen Bezugszeichen versehenen Teile der Verschiebevorrichtung 50b entsprechen in ihrer Wirkung den anhand **Fig. 4** erläuterten Teile.

Die Verschiebevorrichtung 50b weist zusätzlich einen Gegenkolben 72 auf, durch den sich eine weitere Funktionalität der Verstellvorrichtung ergibt. Eine Gegenfeder 74 stützt sich am Behälter 52 und am Gegenkolben 72 ab. Sie bewirkt eine Kraft, die den Gegenkolben 72 gegen einen behälterseitig ausgebildeten Gegenkolbenanschlag 76 drückt. Am Gegenkolben 72 ist der zweite Anschlag 70b angeordnet, gegen den der Kolben 60 unter Kraftwirkung der Feder 62 gedrückt wird, um die Schließanordnung 20a in der Stellung gemäß **Fig. 1** und **Fig. 2** zu positionieren.

Ein zweiter Druckmittelanschluss 78 erlaubt zum Ausnutzen der weiteren Funktionalität die Zufuhr von Druckmittel in den Behälter derart, dass die Kraft der Feder 62 unterstützt wird und der Kolben 60 gegen den Gegenkolben 72 und die Kraft der Gegenfeder 76 gedrückt wird, so dass sich Kolben 60 und Gegenkolben 72 in Schließrichtung C bewegen. Die Kräfte der Feder 62 und der Gegenfeder 74 sind dabei so bemessen, dass auf die Schließanordnung 20a bei Druckmittelbeaufschlagung durch den zweiten Druckmittelanschluss 78 eine Kraft einwirkt, die Ventilsitz 26 und Ventilteller 28 unabhängig von der Wirkung des thermodynamischen Stellgliedes, des Balges 22, in dichtendem Kontakt miteinander hält. Der Kondensatableiter 10 befindet sich so unabhängig von den thermodynamischen Verhältnissen in seinem Innenraum 14 und der Prozessanlage in einer Dauerschließstellung.

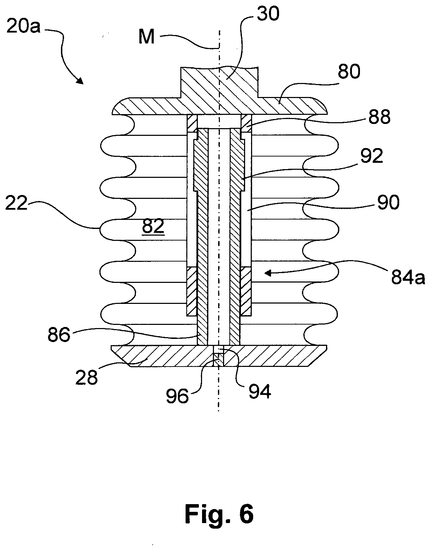

In **Fig. 6** ist ein Längsschnitt durch die Schließanordnung 20a gezeigt. Die Stirnseiten des Balges 22 sind dicht mit einem Deckel 80 und dem Ventilteller 28 verbunden. Der Deckel wiederum ist mit der Schaltstange 30 verbunden. Die gezeigte Ausführung bietet eine leichte Herstellbarkeit, da die jeweils an den Deckel 80 und den Ventilteller 28 angebrachte Balgfalte radial nach außen gekrümmt in Deckel 80 beziehungsweise Ventilteller 28 übergeht. Balg 22, Deckel 80 und Ventilteller 28 umschließen einen Balginnenraum 82.

Im Balginnenraum 82, vorzugweise nahe der Symmetrieachse M des weitgehend rotationssymmetrischen Balges 22, ist ein Führungsmittel 84a angeordnet. Dieses umfasst eine Stange 86, die mit dem Ventilteller 28 verbunden ist. Die Stange 86 befindet sich in einer Hohlstange 88. Beide Stangen 86 und 88 sind so gestaltet, dass die Stange 86 teleskopartig in der Hohlstange 88 gleiten kann. Hierdurch wird eine radiale Auslenkung des Ventiltellers gegenüber dem Deckel 80 unterbunden.

In einer vorteilhaften Weiterbildung weist die Hohlstange wenigstens einen Längsschlitz 90 auf, in welchem eine auf der Stange 86 vorgesehene Erhebung 92 gleitet. Der Längsschlitz 90 besitzt eine begrenzte Ausdehnung in Richtung der Symmetrieachse M, so dass die Erhebung 92 nur über diese Ausdehnung des Längsschlitzes 90 verschiebbar ist. Hierdurch werden die Dehnung des Balges 22 in Richtung der Symmetrieachse M und so der minimale und maximale Abstand von Deckel 80 und Ventilteller 28 zueinander begrenzt. Überdehnung oder zu starke Stauchung des Balges 22 werden auf diese Weise vermieden. Der Längsschlitz 90 ist so bemessen, dass der Balg 22 die für die Funktion des Kondensatableiters 10 notwendige zusammengezogene Länge Z und ausgedehnte Länge A erreicht. Das zentral angeordnete Führungsmittel 84a erlaubt einen dünnwandigen Balg 22, so dass ein guter und dadurch schneller Wärmeübergang vom Innenraum 14 des Kondensatableiters 10 auf das Fluid im Balginnenraum 82 stattfindet.

Der Ventilteller 28 kann eine Einlassbohrung 94 aufweisen, durch die der Balginnenraum 82 mit Fluid befüllbar ist. Die Einlassbohrung 94 wird nach Befüllen des Balginnenraumes 82 mit einem Stopfen 96 fluiddicht verschlossen. Vorteilhaft ist die Stange 86 ebenfalls hohl ausgeführt und bildet einen Fluidkanal mit der Einlassbohrung 94.

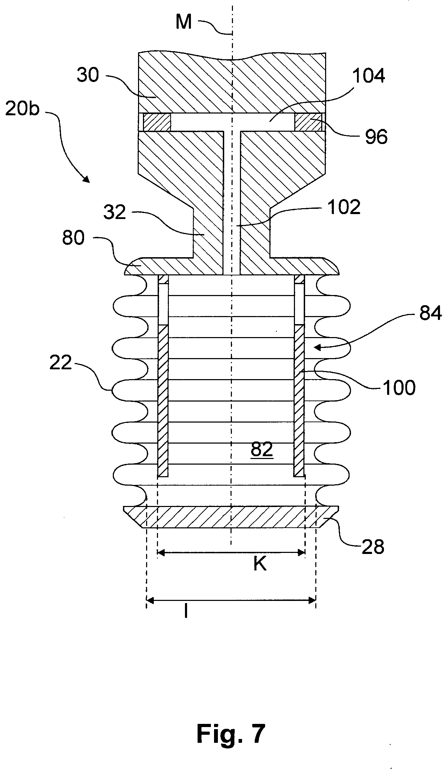

Eine Alternative Ausführung der Schließanordnung zeigt **Fig. 7** mit Hilfe eines Längsschnittes durch die Schließanordnung 20b. Die Schließanordnung 20b besitzt ebenfalls einen zwischen Deckel 80 und Ventilteller 28 angeordneten Balg 22, die zusammen den Balginnenraum 82 begrenzen. Als Führungsmittel dient ein im Balginnenraum angeordneter Käfig 100. Dieser besitzt einen Außendurchmesser K, der so dicht am Innendurchmesser I des Balges 22 liegt, dass die möglichen Verschiebungen des Balges 22 in radialer Richtung und damit die Auslenkung des Ventiltellers 28 gegenüber dem Deckel 80 so gering sind, dass die Funktion des Kondensatableiters 10 gewährleistet ist. Die axiale Ausdehnung des Käfigs 100 begrenzt die Stauchung des Balges 22. Diese Ausführung des Führungsmittels ist durch den Verzicht auf ineinander gleitenden Teilen vorteilhaft einfach aufgebaut.

Die Befüllung des Balginnenraumes 82 erfolgt in der Schließanordnung 20b durch einen Einlasskanal 102, der die Einschnürung 32 der Schaltstange 30 in axialer Richtung durchsetzt und in eine Querbohrung 104 mündet. Die Querbohrung ist mit einer entsprechenden Anzahl Stopfen 96 abgedichtet.

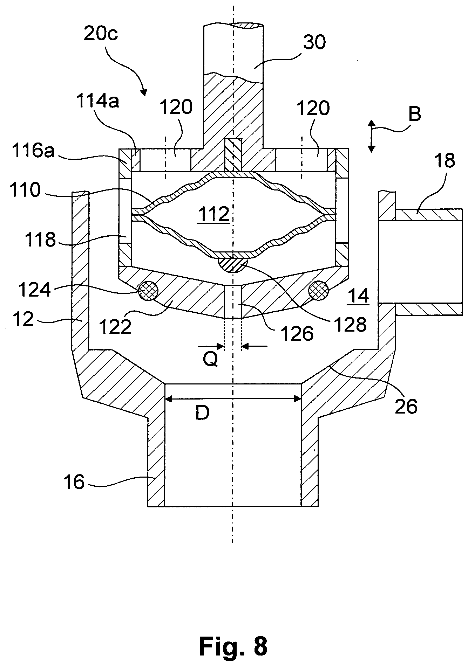

In **Fig. 8** ist ein Kondensatableiter 10 mit einer weiteren Ausführungsform einer Schließanordnung 20c im Schnitt dargestellt.

Das thermodynamische Stellglied ist in dieser Ausführungsform als druckdicht geschlossene Kapsel 110 ausgeführt. Die Kapsel 110 ist aus zwei profilierten Blechscheiben geformt, die an ihren Außenrändern dicht miteinander verbunden sind, beispielsweise verschweißt. Im Kapselinnenraum 112 befindet sich ein Fluid, dessen Volumen von den thermodynamischen Bedingungen im Innenraum 14 des Gehäuses 12 des Kondensatableiters 10 abhängt. Die Profilierung der Blechscheiben ist so gewählt, dass eine Volumenzunahme die Ausdehnung der Kapsel 110 in Richtung der Bewegungsrichtung B der Schließanordnung 20c bewirkt.

Die Kapsel ist mit einer Tragstruktur 114a verbunden, die ihrerseits an der Schaltstange 30 befestigt ist, welche eine Einschnürung 32 aufweisen kann. Die Tragstruktur 114a ist mit einem Träger 116a versehen, welcher wenigstens eine seitliche Öffnung 118 aufweist, durch welche Prozessfluid vom Innenraum 14 zur Kapsel 110 gelangt. Die Tragstruktur 114a weist obere Öffnungen 120 auf, die ebenfalls die Kapseloberfläche für Prozessfluid aus dem Innenraum 14 zugänglich machen.

Der Träger 116a umgibt die Kapsel 110 und ist mit einem Schließelement 122 verbunden, welches mit dem Ventilsitz 26 zusammenwirkt und eine Schließdichtung 124 umfassen kann.

Das Schließelement besitzt einen Durchlass 126, der so angeordnet ist, dass ein an der Kapsel 110 angeordneter Schließer 128 bei ausgedehnter Kapsel 110 den Durchlass 126 verschließt.

In **Fig. 8** ist zur besseren Übersichtlichkeit die Kapsel 110 in zusammengezogenen Zustand gezeigt, gleichzeitig ist das Schließelement 122 vom Ventilsitz 26 abgehoben. Während des Betriebes des Kondensatableiters 10 in einer Prozessanlage werden insbesondere die folgend beschriebenen Funktionen ausgenutzt.

Die Kapsel 110 der Schließanordnung 20c zieht sich unter den gewünschten thermodynamischen Bedingungen im Innenraum 14, beispielsweise wenn dort flüssiges Kondensat vorliegt, zusammen. Hierdurch wird der Schließer 128 angehoben und gibt den Durchlass 126 frei. Gleichzeitig steht in der Kondensatablassfunktion das Schließelement 122 in dichtendem Kontakt mit dem Ventilsitz 26. Auf diese Weise wird Kondensat lediglich durch den im Verhältnis zur freien Öffnung D des Ventilsitzes 26 kleinen Durchlassquerschnitt Q aus dem Innenraum 14 in den ersten Anschluss 16 entfernt. Der Durchlassquerschnitt ist dabei so bemessen, dass im Innenraum 14 höchstens ein Druckabfall entsteht, der die vom Prozess gegebenen Grenzen von Temperatur und Druck im Innenraum 14 und der Prozessanlage nicht unterschreitet. Nach dem gewünschten Ablassen des Kondensats dehnt sich die Kapsel 110 aus und der Schließer 128 gelangt in dichtenden Kontakt mit der Öffnung des Durchlasses 126, so dass dieser dicht verschlossen ist. Durch diese Funktionalität ist die Schließanordnung 20c zum thermodynamisch gesteuerten Schalten der Fluidverbindung zwischen erstem Anschluss 16 und zweitem Anschluss 18 eingerichtet.

Mittels der Schaltstange 30 ist die Schließanordnung 20c entlang der Bewegungsrichtung B bewegbar. Insbesondere kann die Schließanordnung 20c angehoben werden, so dass der dichtende Kontakt von Schließelement 122 und der Schließdichtung 124 mit dem Ventilsitz 26 getrennt wird. Durch eine mit der Schaltstange 30 verbundene Verstellvorrichtung 24 wird dieses Anheben bewirkt. Im angehobenen Zustand der Schließanordnung 20c wird eine Fluidverbindung zwischen erstem Anschluss 16 und zweitem Anschluss 18 freigegeben, wobei die volle freie Öffnung D des Ventilsitzes zum Fluidtransport zur Verfügung steht. Hiermit sind im Zuge des Schaltens unter Wirkung der Verstellvorrichtung 24 hohe Fluiddurchsätze durch den Kondensatableiter 10 möglich, was beispielsweise in der CIP-Phase von Vorteil ist.

Die Kapsel 110 ist beispielhaft mit der Tragstruktur 114a verbunden. Alternativ ist sie unmittelbar oder mittelbar, beispielsweise mit einem Haltebügel, an der Tragstruktur 114a, am Träger 116b oder am Schließelement 122 befestigt. Dabei ist ein Abstand zwischen Kapsel 110, insbesondere dem Schließer 128, und dem Schließelement 122 vorzusehen, der bei Ausdehnung der Kapsel 110 das Abdichten des Durchlasses 126 mittels Schließer 128 erlaubt.

Die Ausführung gemäß **Fig. 8** bietet den Vorteil, dass die den Fluiddurchsatz in den beiden Grundfunktionen des Kondensatableiters 10, dem thermodynamischen gesteuerten Schalten und dem mittels Verstellvorrichtung 24 bewirkten Schalten, bestimmenden Maße Durchlassquerschnitt Q und freie Öffnung D in weitgehend unabhängig voneinander gewählt werden können.

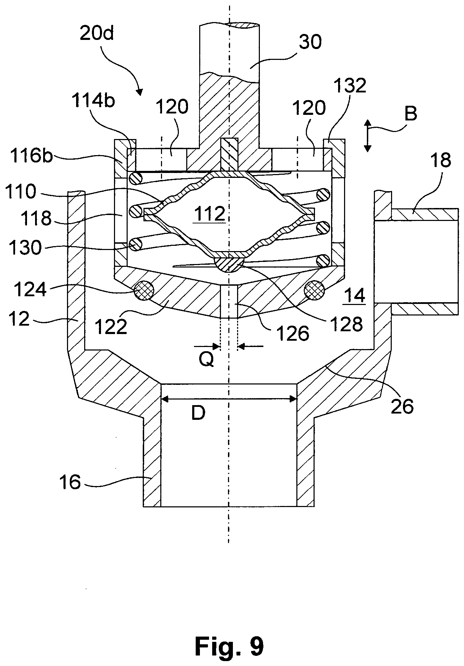

In **Fig. 9** ist eine Weiterbildung des Kondensatableiters mit Kapsel 110 dargestellt. Die Schließanordnung 20d ist in dieser Weiterbildung so gestaltet, dass die Wirkung der Kapsel 110 als thermodynamisches Stellglied durch die Verschiebevorrichtung 50b ausgleichbar ist. Anders ausgedrückt ist die Schließanordnung 20d so eingerichtet, dass der Schließer 128 den Durchlass 126 und das Schließelement 122 durch dichtenden Kontakt mit dem Ventilsitz 26 den ersten Anschluss 16 dauerhaft unter Wirkung der Verschiebevorrichtung 50b verschließen können. Dies geschieht unabhängig von der thermodynamisch bedingten Verformung der Kapsel 110. Diese Eigenschaft der Schließanordnung 20d wird durch die nachfolgend beschriebenen, von **Fig. 8** abweichenden Merkmale erreicht.

Die Tragstruktur 114b und der Träger 116b sind im Gegensatz zur Ausführung nach **Fig. 8** in der Weiterbildung nach **Fig. 9** nicht fest miteinander verbunden. Tragstruktur 114b und Träger 116b sind entlang der Bewegungsrichtung B gegeneinander verschiebbar ausgeführt. Hierdurch ist der Abstand zwischen Tragstruktur 114b und Schließelement 122 veränderbar, insbesondere kann er verringert werden. Zwischen Tragstruktur 114b und Schließelement 122 ist ein elastisches Element, beispielsweise eine Schließanordnungsfeder 130 angeordnet, welche so gestaltet ist, dass Tragstruktur 114b und Schließelement 122 entlang der Bewegungsrichtung B auseinander gedrückt werden. Die Bewegung voneinander weg wird begrenzt durch einen am Träger 116b vorgesehenen Flansch 132, welcher in radialer Richtung einwärts über die Tragstruktur 114b greift.

Ist es nun durch den in der Prozessanlage betriebenen Prozess wünschenswert, den Kondensatableiter dauerhaft zu schließen, wird mittels der Schaltstange 30 und der Tragstruktur 114b eine Kraft ausgeübt, die einen dichtenden Kontakt von Schließelement 122 und Ventilsitz 26 bewirkt und darüber hinaus die Schließanordnungsfeder 130 zusammendrückt. Tragstruktur 114b und die daran befestigte Kapsel 110 werden soweit in Richtung des Schließelements 122 bewegt, dass der Schließer 128 den Durchlass 126 dichtend verschließt. Auf diese Weise sind beide Öffnungen des Kondensatableiters dicht verschlossen und es kann kein Fluidfluss zwischen erstem Anschluss 16 und zweitem Anschluss 18 stattfinden.

In **Fig. 9** ist die Kapsel 110 mit der Tragstruktur 114b verbunden dargestellt. Die Kapsel 110 kann in alternativen Ausführungen angeordnet sein, wobei die Kapsel 110 jeweils so in der Schließanordnung 20d angebracht ist, dass der Schließer 128 im zusammengezogenen Zustand der Kapsel 110 den Durchlass 126 freigibt und ihn bei Ausdehnung der Kapsel 110 verschließt. Hierzu ist die Kapsel 110 unmittelbar oder mittelbar, beispielsweise mit einem Haltebügel, an einem anderen Teil der Schließanordnung 20d befestigt, beispielsweise an der Tragstruktur 114 oder am Schließelement 122. Bei Befestigung am Schließelement 122 ist zu beachten, dass die Befestigung flexibel gestaltet ist. Die Flexibilität muss so bemessen sein, dass durch Einleiten einer Kraft mittels der Schaltstange 30 die Kapsel 110 soweit auf das Schließelement 122 hin bewegbar ist, dass der Schließer 128 den Durchlass 126 verschließt.

Innerhalb der Kapsel 110 kann in beiden Ausführungen nach **Fig. 8** und **Fig. 9** in einer Weiterbildung ein Führungsmittel wie anhand der Beispiele nach **Fig. 6** und **Fig. 7** angeordnet sein, insbesondere, um eine zu starke Stauchung der Kapsel zu verhindern. Die Überdehnung kann bereits durch eine entsprechend gewählte axiale Länge des Trägers 116 verhindert werden.

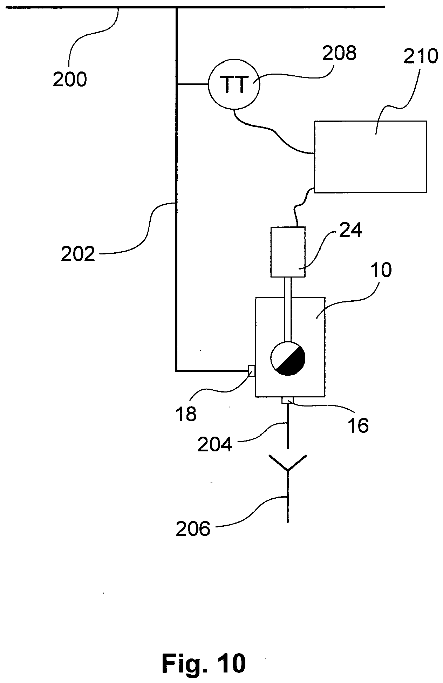

Die **Fig. 10** zeigt in einer schematischen Darstellung eine Prozessanlage. In dieser ist ein Kondensatableiter 10 mit den bisher erläuterten Gestaltungsmerkmalen eingebaut.

Die Prozessanlage besitzt eine Rohrleitungsanordnung 200, von der eine Kondensatleitung 202 abzweigt. In dieser ist der Kondensatableiter 10 angeordnet, beispielsweise indem der zweite Anschluss 18 mit der Kondensatleitung 202 verbunden ist. Der erste Anschluss 16 des Kondensatableiters 10 ist mit einer Ablassleitung 204 verbunden. Diese Ablassleitung 204 stellt eine Fluidverbindung vom Kondensatableiter 10 zu einer Entsorgungseinrichtung 206 her, die zur Entsorgung von verunreinigten Fluiden und Reinigungsmitteln aus dem CIP/SIP-Prozess eingerichtet ist.

Während des Betriebes des Kondensatableiters 10 als thermodynamisch gesteuertem Schalter befindet sich die Schließanordnung 20a, 20b, 20c, 20d des Kondensatableiters 10 in der Stellung gemäß **Fig. 1****.,** so dass der Kondensatableiter bei Auftreten von Kondensat in seinem Innenraum 14 soweit öffnet, dass Kondensat der Entsorgungseinrichtung 206 zugeführt wird. Dies entspricht der SIP-Phase, der Sterilisationsphase mit Wasserdampf.

In der CIP-Phase, in der mit Laugen und/oder Säuren die Rohrleitungsanordnung 200 der Prozessanlage und die damit verbundenen Prozesskomponenten gereinigt werden, wird die Schließanordnung 20a, 20b, 20c, 20d des Kondensatableiters 10 mittels der Verstellvorrichtung 24 in die dauerhafte Offenstellung gebracht, siehe beispielsweise **Fig. 3****.** Die verbrauchten Fluide des CIP-Prozesses werden der Entsorgungseinrichtung 206 zugeführt.

Die SIP-Phase kann erst nach Überschreiten einer unteren Grenztemperatur innerhalb der Prozessanlage durchgeführt werden. Daher kann in einer Weiterbildung ein Temperatursensor 208 mit der Prozessverrohrung, beispielsweise der Kondensatleitung 202, verbunden sein, um die Temperatur innerhalb der Prozessanlage zu überwachen. Die Überwachung geschieht automatisiert in einer Steuereinrichtung 210. Bei Überschreiten der Grenztemperatur bewirkt die Steuereinrichtung 210 ein Schalten der Verstellvorrichtung 24 und bringt die Schließanordnung 20a, 20b, 20c, 20d des Kondensatableiters 10 in diejenige Stellung, in der sie als thermodynamisch gesteuerte Schalteinheit wirkt.

Vorteilhaft entfällt bei der in **Fig. 10** gezeigten Prozessanlage der Bedarf einer Überbrückungsleitung mit entsprechenden Ventilen, mit der im Stand der Technik der Kondensatableiter 10 überbrückt werden muss. Außerdem ist es unnötig, zwischen Rohrleitungsanordnung 200 und Kondensatableiter 10 ein Ventil zum Trennen des Kondensatableiters 10 von der Rohrleitungsanordnung 200 vorzusehen.

### Bezugszeichenliste

- 10: Kondensatableiter
- 12: Gehäuse
- 14: Innenraum
- 16: erster Anschluss
- 18: zweiter Anschluss
- 20a, 20b, 20c, 20d: Schließanordnung
- 22: Balg
- 24: Verstellvorrichtung
- 26: Ventilsitz
- 28: Ventilteller
- 30: Schaltstange
- 32: Einschnürung
- 50a: Verschiebevorrichtung
- 50b: Verschiebevorrichtung
- 52: Behälter
- 54: Antriebsstange
- 56: obere Dichtung
- 58: untere Dichtung
- 60: Kolben
- 62: Feder
- 64: erster Druckmittelanschluss
- 66: Stopper
- 68: erster Anschlag (Offenstellung)
- 70a: zweiter Anschlag (Schwebestellung)
- 70b: zweiter Anschlag (Schwebestellung)
- 72: Gegenkolben
- 74: Gegenfeder
- 76: Gegenkolbenanschlag
- 78: zweiter Druckmittelanschluss
- 80: Deckel
- 82: Balginnenraum
- 84: Führungsmittel
- 86: Stange
- 88: Hohlstange
- 90: Längsschlitz
- 92: Erhebung
- 94: Einlassbohrung
- 96: Stopfen
- 100: Käfig
- 102: Einlasskanal
- 104: Querbohrung
- 110: Kapsel
- 112: Kapselinnenraum
- 114a, 114b: Tragstruktur
- 116a, 116b: Träger
- 118: seitliche Öffnung
- 120: obere Öffnung
- 122: Schließelement
- 124: Schließdichtung
- 126: Durchlass
- 128: Schließer
- 130: Schließanordnungsfeder
- 132: Flansch
- 200: Rohrleitungsanordnung
- 202: Kondensatleitung
- 204: Ablassleitung
- 206: Entsorgungseinrichtung
- 208: Temperatursensor
- 210: Steuereinrichtung
- B: Bewegungsrichtung
- Z: zusammengezogene Länge
- A: ausgedehnte Länge
- S: Spaltweite
- D: freie Öffnung des Ventilsitzes
- F: Öffnungsrichtung
- C: Schließrichtung
- M: Symmetrieachse
- I: Innendurchmesser
- K: Außendurchmesser Käfig
- Q: Durchlassquerschnitt

## Patentansprüche

1. Kondensatableiter (10) mit einer ein thermodynamisches Stellglied (22; 110) umfassenden Schließanordnung (20a; 20b; 20c; 20d), die zum thermodynamisch gesteuerten Schalten einer Fluidverbindung zwischen einem ersten Anschluss (16) und einem zweiten Anschluss (18) des Kondensatableiters (10) unter Wirkung des thermodynamischen Stellgliedes (22; 110) eingerichtet ist, **dadurch gekennzeichnet, dass** der Kondensatableiter (10) eine mit der Schließanordnung (20a; 20b; 20c; 20d) verbundene Verstellvorrichtung (24) umfasst und die Schließanordnung (20a; 20b; 20c; 20d) zum Schalten der Fluidverbindung unter Wirkung der Verstellvorrichtung (24) unabhängig von den thermodynamischen Gegebenheiten eingerichtet ist.

2. Kondensatableiter nach Anspruch 1, **dadurch gekennzeichnet, dass** die Verstellvorrichtung (24; 50a; 50b) druckmittelbetreibbar ausgeführt ist.

3. Kondensatableiter nach Anspruch 1 oder 2, **dadurch gekennzeichnet, dass** die Verstellvorrichtung (24) als Verschiebevorrichtung (50a; 50b) zum Bewirken einer geradlinigen Bewegung ausgeführt ist.

4. Kondensatableiter nach Anspruch 3, **dadurch gekennzeichnet, dass** die Verschiebevorrichtung (50b) derart gestaltet ist, dass die Wirkung des thermodynamischen Stellgliedes (22; 110b) mittels der Verschiebevorrichtung (50b) ausgleichbar ist, um die Fluidverbindung in einer Dauerschließstellung unabhängig von der Wirkung des thermodynamischen Stellgliedes (22; 110b) zu unterbrechen.

5. Kondensatableiter nach einem der Ansprüche 1 bis 4, **dadurch gekennzeichnet, dass** das thermodynamische Stellglied (22; 110) einen mit einem Fluid gefüllten Balg (22) umfasst.

6. Kondensatableiter nach Anspruch 5, **dadurch gekennzeichnet, dass** innerhalb des Balges (22) ein Führungsmittel (84) angeordnet ist, welches die Kontraktion des Balges (22) in einer axialen Richtung und die Verschiebung in einer radialen Richtung begrenzt.

7. Kondensatableiter nach Anspruch 6, **dadurch gekennzeichnet, dass** das Führungsmittel (84) eine Stange (86) umfasst, welche teleskopartig beweglich in einer Hohlstange (88) angeordnet ist.

8. Kondensatableiter nach einem der Ansprüche 1 bis 4, **dadurch gekennzeichnet, dass** das thermodynamische Stellglied (22; 110) eine mit einem Fluid gefüllte Kapsel (110) umfasst, welche in einer axialen Richtung durch Wirkung des Fluids dehnbar ist.

9. Kondensatableiter nach Anspruch 8, **dadurch gekennzeichnet, dass** die Schließanordnung (20c; 20d) einen verschließbaren Durchlass (126) aufweist, der durch Wirkung des thermodynamischen Stellgliedes (110) steuerbar ist.

10. Kondensatableiter nach einem der Ansprüche 5 bis 9, **dadurch gekennzeichnet, dass** das Fluid Wasser und Ethanol als Hauptbestandteile aufweist.

11. Kondensatableiter nach einem der vorhergehenden Ansprüche, **dadurch gekennzeichnet, dass** zwischen Verstellvorrichtung (24; 50a; 50b) und Schließanordnung (20a; 20b; 20c; 20d) eine Schaltstange (30) vorgesehen ist, welche eine Einschnürung (32) zur Verringerung der Wärmeleitung aufweist.

12. Kondensatableiter nach einem der vorhergehenden Ansprüche, **dadurch gekennzeichnet, dass** die Schließanordnung (20a, 20b; 20c; 20d) durch metallischen Kontakt metallisch dichtend mit einem Ventilsitz (26) zusammenwirkt.

13. Kondensatableiter nach einem der vorhergehenden Ansprüche, **dadurch gekennzeichnet, dass** durch Schalten der Schließanordnung (20a, 20b; 20c; 20d) mittels der Verstellvorrichtung (24; 50a; 50b) eine größere Durchtrittsfläche von einem Innenraum (14) des Kondensatableiters in den ersten Anschluss (16) als durch Schalten der Schließanordnung (20a, 20b; 20c; 20d) mittels des thermodynamischen Stellgliedes (22; 110) freigegeben wird.

14. Prozessanlage mit einer Rohrleitungsanordnung (200) und einer Entsorgungseinrichtung (206), **dadurch gekennzeichnet, dass** zwischen der Rohrleitungsanordnung (200) und der Entsorgungseinrichtung (206) ein Kondensatableiter (10) nach einem der vorhergehenden Ansprüche angeordnet ist.

15. Prozessanlage nach Anspruch 14, **dadurch gekennzeichnet, dass** sie einen Temperatursensor (208) im innenraum der Prozessanlage oder mit diesem verbunden und eine mit dem Temperatursensor (208) verbundene Steuereinrichtung (210) zum Steuern der Verstellvorrichtung (24; 50a; 50b) in Abhängigkeit vom Signal des Temperatursensors (208) umfasst.

## Claims

1. A condensate drain (10) with a closing arrangement (20a; 20b; 20c; 20d) which comprises a thermodynamic actuator (22; 110) and is set up for switching a fluid connection between a first connector (16) and a second connector (18) of the condensate drain (10) in a thermodynamically controlled manner under the action of the thermodynamic actuator (22; 110) **characterised in that** the condensate drain (10) comprises an adjusting device (24) which is connected to the closing arrangement (20a; 20b; 20c; 20d), and the closing arrangement (20a; 20b; 20c; 20d) is set up for switching the fluid connection under the action of the adjusting device (24) irrespective of the thermodynamic conditions.

2. The condensate drain according to claim 1, **characterised in that** the adjusting device (24; 50a; 50b) is adapted for operation by a pressurising means.

3. A condensate drain according to claim 1 or 2, **characterised in that** the adjusting device (24) is realised as a displacement device (50a; 50b) for effecting a linear movement.

4. The condensate drain according to claim 3, **characterised in that** the displacement device (50b) is designed such that the effect of the thermodynamic actuator (22; 110b) can be compensated my means of the displacement device (50b) in order to interrupt the fluid connection in a permanent closing position, irrespective of the effect of the thermodynamic actuator (22; 110b).

5. A condensate drain according to one of the claims 1 to 4, **characterised in that** the thermodynamic actuator (22; 110) comprises a bellows (22) filled with a fluid.

6. The condensate drain according to claim 5, **characterised in that** a guide means (84) is arranged within the bellows (22), which limits the contraction of the bellows (22) in an axial direction and the displacement in a radial direction.

7. The condensate drain according to claim 6, **characterised in that** the guide means (84) comprises a bar (86), which is telescope-like movably arranged in a hollow bar (88).

8. A condensate drain according to one of the claims 1 to 4, **characterised in that** the thermodynamic actuator (22; 110) comprises a capsule (110) filled with a fluid, which can be extended in an axial direction by effect of the fluid.

9. The condensate drain according to claim 8, **characterised in that** the closing arrangement (20c; 20d) comprises a lockable passage (126), which can be controlled by effect of the thermodynamic actuator (110).

10. A condensate drain according to one of the claims 5 to 9, **characterised in that** the fluid comprises water and ethanol as main ingredients.

11. A condensate drain according to one of the preceding claims, **characterised in that** a switching bar (30) is arranged between the adjusting device (24; 50a; 50b) and the closing arrangement (20a; 20b; 20c; 20d), which comprises a constriction (32) for the reduction of the heat conduction.

12. A condensate drain according to one of the preceding claims, **characterised in that** the closing arrangement (20a; 20b; 20c; 20d) co-operates with a valve seat (26) by metal contact to be metal-to-metal sealing.

13. A condensate drain according to one of the preceding claims, **characterised in that** by switching the closing arrangement (20a; 20b; 20c; 20d) by means of the adjusting device (24; 50a; 50b), a greater entry surface from an inner space (14) of the condensate drain into the first first connector (16) is permitted than by switching the closing arrangement (20a; 20b; 20c; 20d) by means of the thermodynamic actuator (22; 110).

14. A processing plant with a pipeline arrangement (200) and a disposal facility (206), **characterised in that** a condensate drain (10) according to one of the preceding claims is arranged between the pipeline arrangement (200) and the disposal facility (206).

15. The processing plant according to claim 14, **characterised in that** it comprises a temperature sensor (208) in the inner space of the processing plant or connected to the latter, and a control device (210) connected to the temperature sensor (208) for controlling the adjusting device (24; 50a; 50b) as a function of the signal of the temperature sensor (208).

## Revendications

1. Purgeur d'eau de condensation (10) comprenant un ensemble de fermeture (20a; 20b; 20c; 20d) doté d'un actionneur thermodynamique (22; 110), cet ensemble étant conçu pour commander de manière thermodynamique une liaison fluidique entre un premier raccordement (16) et un deuxième raccordement (18) du purgeur d'eau de condensation (10) sous l'effet de l'action de l'actionneur thermodynamique (22; 110), **caractérisé en ce que** le purgeur d'eau de condensation (10) comprend un dispositif de positionnement (24) relié à l'ensemble de fermeture (20a; 20b; 20c; 20d) et l'ensemble de fermeture (20a; 20b; 20c; 20d) est conçu pour commander la liaison fluidique sous l'action du dispositif de positionnement (24) quelles que soient les conditions thermodynamiques.

2. Purgeur d'eau de condensation selon la revendication 1, **caractérisé en ce que** le dispositif de positionnement (24; 50a; 50b) est conçu pour l'opération par un moyen de pressurisation.

3. Purgeur d'eau de condensation selon la revendication 1 ou 2, **caractérisé en ce que** le dispositif de positionnement (24) est conçu comme un dispositif de déplacement (50a; 50b) pour effectuer un mouvement linéaire.

4. Purgeur d'eau de condensation selon la revendication 3, **caractérisé en ce que** le dispositif de déplacement (50b) est conçu tellement que l'effet de l'actionneur thermodynamique (22; 110b) peut être compensé moyennant le dispositif de déplacement (50b) afin d'interrompre la connexion fluidique dans une position de fermeture permanente, quel que soit l'effet de l'actionneur thermodynamique (22; 110b).

5. Purgeur d'eau de condensation selon une des revendications 1 à 4, **caractérisé en ce que** l'actionneur thermodynamique (22; 110) comporte un soufflet (22) rempli d'un fluide.

6. Purgeur d'eau de condensation selon la revendication 5, **caractérisé en ce que** un moyen de guidage (84) est arrangé à l'intérieur du soufflet (22), qui limite la contraction du soufflet (22) dans une direction axiale et le déplacement dans une direction radiale.

7. Purgeur d'eau de condensation selon la revendication 6, **caractérisé en ce que** le moyen de guidage (84) comprend une barre (86), qui est arrangée coulissant de façon télescopique dans une barre creuse (88).

8. Purgeur d'eau de condensation selon une des revendications 1 to 4, **caractérisé en ce que** l'actionneur thermodynamique (22; 110) comprend une capsule (110) remplie avec un fluide, qui est extensible dans une direction axiale par l'action du fluide.

9. Purgeur d'eau de condensation selon la revendication 8, **caractérisé en ce que** l'ensemble de fermeture (20c; 20d) comprend un passage pouvant être fermé (126), qui est potable par l'action de l'actionneur thermodynamique (110).

10. Purgeur d'eau de condensation selon une des revendications 5 to 9, **caractérisé en ce que** le fluide comprend de l'eau et éthanol comme ingrédients principaux.

11. Purgeur d'eau de condensation selon une des revendications précédentes, **caractérisé en ce que** une barre de commutation (30) est arrangée entre le dispositif de positionnement (24; 50a; 50b) et l'ensemble de fermeture (20a; 20b; 20c; 20d), qui comprend un étranglement (32) pour la réduction de la conduction thermique.

12. Purgeur d'eau de condensation selon une des revendications précédentes, **caractérisé en ce que** l'ensemble de fermeture (20a; 20b; 20c; 20d) co-opère avec un siège de soupape (26) par contact métallique faisant étanchéité métallique.

13. Purgeur d'eau de condensation selon une des revendications précédentes, **caractérisé en ce que** en commutant l'ensemble de fermeture (20a; 20b; 20c; 20d) moyennant le dispositif de positionnement (24; 50a; 50b), une surface de passage plus grande d'un espace intérieur (14) du purgeur d'eau de condensation vers le premier raccordement (16) est permise que par commutation de l'ensemble de fermeture (20a; 20b; 20c; 20d) moyennant l'actionneur thermodynamique (22; 110).

14. Système de traitement avec une tuyauterie (200) et un dispositif de rejet (206), **caractérisé en ce que** un purgeur (10) selon une des revendications précédentes est arrangé entre la tuyauterie (200) et le dispositif de rejet (206).

15. Système de traitement selon la revendication 14, **caractérisé en ce que** il comprend un capteur de température (208) dans l'espace intérieur du système de traitement ou raccordé à ce dernier, et un dispositif de commande (210) raccordé au capteur de température (208) pour commander le dispositif de positionnement (24; 50a; 50b) en fonction du signal du capteur de température (208).
